# EUROPEAN PATENT SPECIFICATION

(11) **EP 1 306 015 B1**
(45) Date of publication and mention of the grant of the patent: **20.07.2005**
(21) Application number: 01309054.3
(22) Date of filing: 25.10.2001
(51) Int. Cl.: A23L 1/16

(54) **Process for preparing a frozen pasta meal with sauce**
Methode zur Zubereitung eines tiefgekühlten Nudelgerichtes mit Sosse
Procédé de préparation d'un plat à base de pâtes alimentaires congelées et de sauce

(43) Date of publication of application: 02.05.2003
(73) Proprietor: UNILEVER PLC, London EC4P 4BQ (GB); UNILEVER N.V., 3013 AL Rotterdam (NL)
(72) Inventor: Gardosi, Marzia, Sagit S.p.a. Unilever Italia,, 04012 Cisterna di Latina (IT); Nardi, Roberto, 00143 Rome (IT); Panaioli, Sandro, c/o Sagit S.p.a., Unilever Italy, 04012 Cisterna di Latina (IT); Di Rosa, Vincenzo, 00143 Rome (IT)
(74) Representative: Acham, Nicholas Clive

(56) References cited:
- WO-A-00/60955
- US-A- 4 732 080
- US-A- 5 151 289
- DATABASE WPI Section Ch, Week 200201 Derwent Publications Ltd., London, GB; Class D11, AN 2002-002363 XP002194253 & JP 2001 224505 A (NIHON DENNETSU KK), 21 August 2001 (2001-08-21)
- DATABASE WPI Section Ch, Week 199217 Derwent Publications Ltd., London, GB; Class D13, AN 1992-137934 XP002194254 & JP 04 079918 A (FURUKAWA S), 13 March 1992 (1992-03-13)
- DATABASE WPI Section Ch, Week 200165 Derwent Publications Ltd., London, GB; Class D13, AN 2001-575086 XP002194255 & JP 2001 212000 A (NIHON DENNETSU KK), 7 August 2001 (2001-08-07)
- DATABASE WPI Section Ch, Week 198935 Derwent Publications Ltd., London, GB; Class D11, AN 1989-251698 XP002194256 & JP 01 181759 A (NISSHIN FLOUR MILLING CO), 19 July 1989 (1989-07-19)
- PATENT ABSTRACTS OF JAPAN vol. 1997, no. 04, 30 April 1997 (1997-04-30) & JP 08 332040 A (KIYUUSAI KK), 17 December 1996 (1996-12-17)

## Description

### Field of the invention

The invention relates to the field of food preparations. More particularly the invention relates to meals freshly prepared from frozen components at a point of sale.

### Back ground to the invention

Preparation of a meal for consumption at the point of sale from frozen ingredients requires a rapid and convenient preparation techniques.

Conventionally microwave ovens have been used to satisfy these requirements as they provide a time efficient means of heating frozen ingredients. The applicants have however identified that where a frozen meal comprises a pasta component the use of a microwave oven in preparing this component causes significant loss in pasta quality. Microwave heating is believed to induce a structural rearrangement of the protein lattice in the pasta leading to a poor, soft texture being perceived by the consumer even when starting from a very good quality pasta.

The objective technical problem therefore relates to the need to provide a rapid and convenient means of freshly preparing a meal from frozen for consumption at the point of sale, wherein said meal comprises a pasta component. More particularly the problem relates to the preparation of such a meal in which the pasta component retains a firm texture in the mouth of the consumer when eaten.

JP-A-04079918 discloses a method for the steaming of foods such as noodles. The device is said to be able to simultaneously thaw and cook foods without loss of flavour and texture and to markedly shorten cooking times.

JP-A-2001224505 and JP-A-2001212000 disclose steam-type thawing and heating devices that are used principally at restaurants and cafeterias and which, using steam, are used for the thawing and heat cooking of frozen food products such as noodles and spaghetti. The device of JP-A-2001224505 is said to promote the quick thawing and heating of the frozen food product with efficient transfer of heat energy. The device of JP-A-2001212000 is said to thaw and heat frozen food products without introducing moisture to the food and whilst avoiding melting of plastic components.

JP-A1181759 discloses a method for the thawing and heat-processing of frozen noodles using steam at a specific temperature. The method is said to replicate the texture of the gelatinized noodles that exists prior to freezing without alteration.

JP-A08332040 discloses frozen noodles in a container and a method for cooking the noodles. The noodles are eaten cold and are prepared by thawing the noodles in the container using a microwave oven and then adding ice and concentrated sauce. Thawing of the noodles in the microwave oven is said to improve their texture, whilst mixing with ice is said to improve their firmness.

US-A-5151289 discloses noodles which are subjected to gelatinization with a yield from 200 to 280%, arranged into a lump having a specific void percentage and then frozen. The resulting frozen noodles may be thawed and cooked using any method, including by microwave oven or steaming. The noodles are said to be capable of uniform thawing in a short time without deterioration in eating texture.

### Brief description of the invention

It has been found that the solution to identified problem resides in the separation of the pasta component from the microwave preparation of other components of the meal. In particular it has been found that high quality firm pasta can be prepared rapidly and conveniently at point of sale from the frozen component by exposure thereof to steam. Subsequently this may be combined with remaining meal components for consumption.

It is therefore an object of the invention to provide a process for preparing a food product at point of sale wherein said process comprises the steps:
(i) heating a sauce component from frozen by microwave;
(ii) heating a pre-cooked pasta component from frozen with steam;
(iii) combining the products of step (i) and (ii) to serve;
wherein the temperature of the food product on serving is from 60 to 95°C.

### Detailed description of the invention

Selecting the frozen pasta component for heating with steam and the sauce component for heating by microwave allows a superior product having a firm pasta texture to be freshly prepared rapidly and conveniently at a point of sale on the request of the consumer.

The invention will be now described with reference to the drawings wherein:

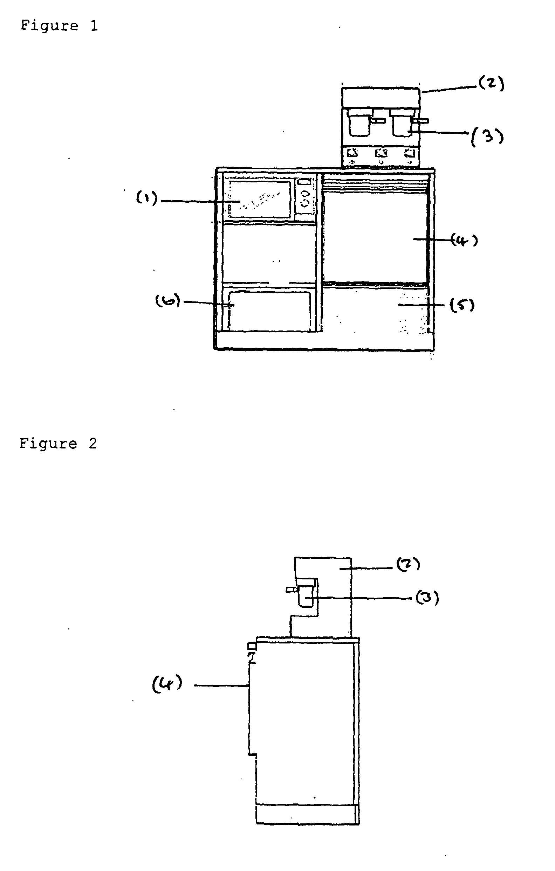

Figure 1: illustrates apparatus suitable for performing the process of the invention providing a microwave means (1); a steam generating means (2) comprising stainless steal containers (3) in which to heat the pasta. The apparatus further provides a freezer compartment (4) for storage of the frozen components, a cooling unit (5) and a collection vessel for condensation (6).
Figure 2: provides a profile view of the apparatus in figure 1.

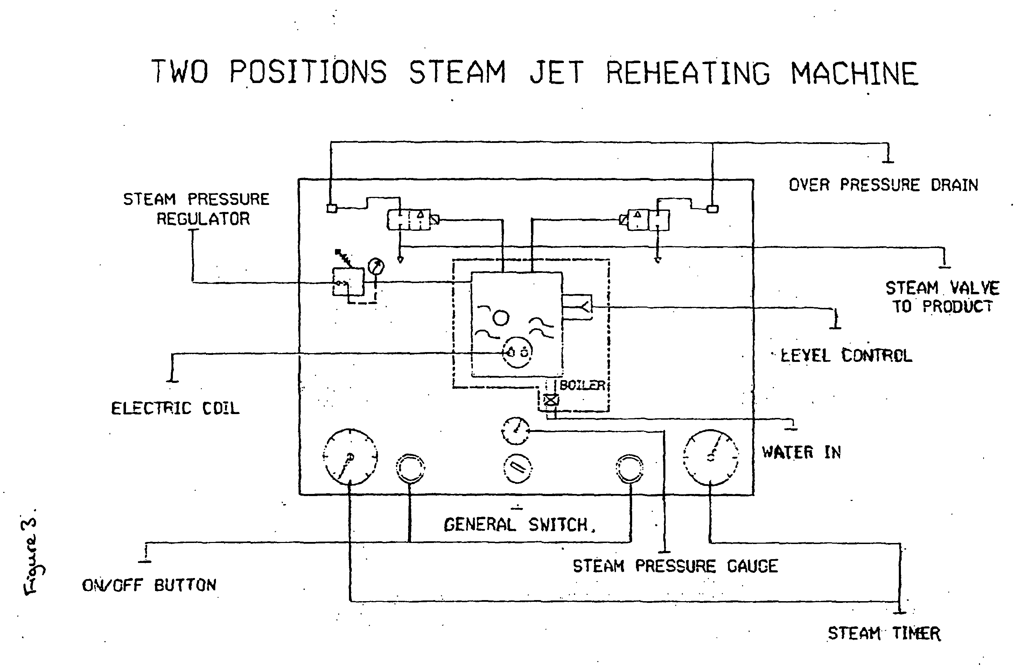

Figure 3: provides a schematic representation of a steam jet reheating means suitable for use in the invention.

The method of the invention is suitable for preparing any pre-cooked frozen pasta prepared from fresh or dried pasta. Pre-cooking dried pasta requires re-hydration to a ratio of between 170 and 210% to provide good textural properties when reheated for consumption, preferably the pasta is re-hydrated to the range 180 to 190%. Pre-cooking fresh pasta may require as little as 130% hydration. Pre-cooking takes between 5 and 10 minutes in cooking blancher with some variation depending on the diameter of the pasta type being prepared.

Preferably the pasta component is pre-cooked dried pasta as this allows the pasta to be not only firm but "al dente" when prepared for consumption. Most preferably the pasta component comprises frozen nests each comprising 20 to 30 grams of pre-cooked long pasta prepared according to the process described in patent application WO00/60955 which is incorporated herein by reference.

Preferably the pre-cooked frozen pasta component is provided in hermetically sealed packets of from 100 and 250 grams, preferably from 100 to 150 grams which provides a single portion. This facilitates the preparation of the meal ensuring that the pasta component can be easily taken from the freezer without any separation difficulties and eliminates the possibility of microbiological contamination during storage.

The portion of frozen pasta is placed in a heat resistant container into which steam is introduced. Preferably the heat resistant container is a stainless steel cup. The pasta is defrosted and heated by exposure to steam, preferably this steam is in the form of a steam jet having a pressure of from 0.5 to 3 bar, more preferably from 1 to 2 bar.

A preferred embodiment therefore comprises a process as described above wherein said pasta is heated in a steam jet have a pressure of 0.5 to 3 bar. The pasta is reheated to a serving temperature of from 60 to 95°C, preferably from 75 to 85°C.

The steam generating means will typically have a boiler capacity of between 3 and 7 litres, wherein the water is preferably heated by electric resistance. Power range will typically be 1000 to 3000W. Suitable steam generating means are available from Cimbali, Milan.

A further preferred embodiment of the invention relates to a process as described above wherein from 100 to 250 grams of pre-cooked frozen pasta are heated from frozen with said steam jet for a period of at least 20 seconds, preferably from 20 to 60 seconds.

Another aspect of the invention relates to the use of a steam generating means for the preparation at a point of sale of pre-cooked frozen pasta.

The sauce component is heated from frozen by microwave, a portion of sauce may be provided in the form of pellets which has an increased surface area and therefore the advantage of requiring less time to reheat. It is to be noted that a wide range of sauces may be used in the process of the present invention including tomato sauces white sauces (bechamel, cheese or cream based) as well as emulsified sauces. Appropriately a single portion of sauce of from 50 to 250 grams is provided in an microwaveable, preferably plastic, container with a plastic peelably removable lid. The lid is removed when the sauce has been reheated prior to serving. Appropriate heating times may be selected according to sauce portion size and power of microwave. Typically a portion of 250 grams in a 800w microwave will take from 2 to 3 minutes.

Alternatively the sauce is distributed to the service outlet as a multiportion tray comprising from 250 to 1000 grams for which the reheat time will be proportionally longer.

The microwave emitting means has a power from 600 to 1200W preferably greater than 800w, and a volume from 17 to 32 litre; suitable machines are available from Panasonic, Whirlpool and Delonghi.

The sauce is heated to a serving temperature between 60 and 95°C, preferably 75 to 85°C. Where a multiportion tray is utilised this is preferably maintained at a serving temperature in a heated holding area. Preferably the multiportion tray will be partially immersed in water maintained at the serving temperature by means of an electric heating element or a low pressure coil (0.5 to 0.7 bar) which branches from the steam generator. As a alternative to immersing the multiportion tray in water a tray preferably made of stainless steel can be used to hold the tray in the heated holding area. A preferred embodiment therefore comprises a process as described above wherein after step (i) said sauce component is held in a heated holding area at a temperature of from 60 to 95°C, more preferably 75 to 85°C.

## Claims

1. A process for preparing a food product at a point of sale
wherein said process comprises:
(i) heating a sauce component from frozen by microwave;
(ii) heating a pre-cooked pasta component from frozen with steam;
(iii) combining the products of step (i) and (ii) to serve;
wherein the temperature of the food product on serving is from 60 to 95°C.

2. A process according to claim 1, wherein said frozen pasta component is heated in a steam jet having a pressure of 0.5 to 3 bar.

3. A process according to claim 2 wherein from 100 to 250 grams of said frozen pasta component are heated with said steam jet for at least 20 seconds.

4. A process according to any one of claims 1 to 3, wherein after step (i) said sauce is held in a heated holding area at a temperature of from 60°C to 95°C.

5. A process according to any preceding claim wherein the pre-cooked pasta component comprises dried pasta re-hydrated to a ratio of between 170 and 210%.

6. A process according to claim 5 wherein the dried pasta is re-hydrated to a ratio of between 180 to 190%.

## Patentansprüche

1. Verfahren zum Zubereiten eines Nahrungsmittelprodukts an einem Verkaufspunkt, wobei das Verfahren umfasst:
(i) Erhitzen einer Saucen-Komponente aus dem gefrorenen Zustand mittels Mikrowelle;
(ii) Erhitzen einer vorgekochten Teigwaren-Komponente aus dem gefrorenen Zustand mittels Dampf;
(iii) Vereinigen der Produkte aus Schritt (i) und (ii) zum Servieren;
wobei die Temperatur des Nahrungsmittelprodukts beim Servieren 60 bis 95°C beträgt.

2. Verfahren nach Anspruch 1, wobei die gefrorene Teigwaren-Komponente in einem Dampfstrahl mit einem Druck von 0,5 bis 3 bar erhitzt wird.

3. Verfahren nach Anspruch 2, wobei 100 bis 250 g der gefrorenen Teigwaren-Komponente mit dem Dampfstrahl mindestens 20 Sekunden lang erhitzt werden.

4. Verfahren nach einem der Ansprüche 1 bis 3, wobei nach dem Schritt (i) die Sauce in einer Warmhaltezone auf einer Temperatur von 60°C bis 95°C gehalten wird.

5. Verfahren nach einem vorhergehenden Anspruch, wobei die vorgekochte Teigwaren-Komponente getrocknete Teigwaren aufweist, die auf ein Verhältnis von 170 bis 210% rehydratisiert sind.

6. Verfahren nach Anspruch 5, wobei die getrockneten Teigwaren auf ein Verhältnis von 180 bis 190% rehydratisiert sind.

## Revendications

1. Processus de préparation d'un produit alimentaire au sein d'un point de vente, dans lequel ledit processus comprend :
(i) le réchauffage d'une sauce congelée au four à micro-ondes ;
(ii) le réchauffage d'une pâte précuite congelée à la vapeur ;
(iii) la combinaison des produits des étapes
(i) et (ii) afin de les servir ;
dans lequel la température du produit alimentaire servi est située entre 60 et 95°C.

2. Processus selon la revendication 1, dans lequel ladite pâte congelée est réchauffée dans un jet de vapeur possédant une pression de 0,5 à 3 bar.

3. Processus selon la revendication 2, dans lequel 100 à 250 grammes de ladite pâte congelée sont réchauffés avec ledit jet de vapeur pendant au moins 20 secondes.

4. Processus selon l'une quelconque des revendications 1 à 3, dans lequel, après l'étape (i), ladite sauce est maintenue dans une zone de conservation chauffée à une température située entre 60°C et 95°C.

5. Processus selon l'une quelconque des revendications précédentes, dans lequel la pâte précuite comprend de la pâte séchée réhydratée selon un rapport situé entre 170 et 210%.

6. Processus selon la revendication 5, dans lequel la pâte séchée est réhydratée selon un rapport situé entre 180 et 190%.
